# EUROPEAN PATENT SPECIFICATION

(11) **EP 0 469 757 B1**
(45) Date of publication and mention of the grant of the patent: **09.11.1994**
(21) Application number: 91306559.5
(22) Date of filing: 18.07.1991
(51) Int. Cl.: A01G 3/04, B27B 17/00, F16P 3/20

(54) **Power tool**
Kraftwerkzeug
Outil motorisé

(30) Priority: 02.08.1990 DE 4024564
(43) Date of publication of application: 05.02.1992
(73) Proprietor: Black & Decker Inc., Newark Delaware 19711 (US)
(72) Inventor: Berghauser, Ulrich, W-5428 Diethardt (DE); Schmid, Karl, W-6270 Idstein 2 (DE)
(74) Representative: Stagg, Diana Christine

(56) References cited:
- EP-A- 0 214 455
- EP-A- 0 422 773
- DE-A- 2 839 002
- DE-A- 2 840 397
- FR-A- 2 558 567

## Description

The invention relates to a portable power tool, in particular a chain-saw or a hedge trimmer, with a handle which is constructed at least in part as a hollow profile and in which at least two actuating elements are provided which can be moved by the operator out of an off-position against spring resistance, and which are coupled with a switch mechanism, which when the actuating elements are in the off-position interrupts the drive of the device.

In a known device of this type as described in EP 0 214 455 B1, actuating elements are provided in the upper section and the two side sections of the front grip handle which is formed as a bow-type handle. These actuating elements are connected to each other by means of a guided cable, one end of which is clamped firmly in the grip handle and the other end of which is coupled with a switch mechanism, e.g. an electrical switch. When the actuating elements are in their neutral or off-position, the coupling of the guided cable and the switch mechanism brings about the interruption of the drive of the device, e.g. because the switch mechanism, consisting of an electrical switch, is brought by spring resistance into a position where the electric circuit for the drive of the electric motor is interrupted. If one of the actuating elements is depressed by the operator against the tension of the cable into the adjacent area of the handle, then the cable is also displaced further into the handle and as a result tension is exerted on the area coupled with the switch mechanism, through which the switch mechanism comes to a position in which the drive is activated, e.g., the contacts of the electrical switch are closed.

In the known arrangement the operator can therefore grip the bow-type handle at various places and operate the switch mechanism by displacing one of the actuating elements. Thus such an arrangement makes the device suitable for right-handed and left-handed people, but also for working with the device in different positions, such as is necessary, for example, in the case of hedge trimmers or chain-saws.

As already mentioned above, the actuating elements of the known arrangement are connected to each other by a cable or the like, which is coupled at one end with the switch mechanism. The use of such a cable, however, means that it is necessary to ensure that there is no stretching during operation, which means that the actuating elements have to be displaced a relatively great distance before the switch mechanism is operated, and can even result in it no longer being possible to operate the switch mechanism by moving a single actuating element, so that re-adjustments have to be made. Moreover, the use of a cable coupled with all of the actuating elements results in a less definite "switch-feeling", i.e. there are no definite end positions for the actuating elements.

It is an object of the invention to provide an improved portable power tool in which an arrangement which is of simple construction and operates reproducibly can be used to actuate the switch mechanism.

The invention provides a portable power tool with a grip handle, which is constructed at least in part as a hollow profile and in which at least two actuating elements are provided which can be moved by the operator against spring resistance from an off-position and which are coupled with a switch mechanism which interrupts the drive of the tool when the actuating elements are in the off-position, characterised in that each of the actuating elements can be pivoted about a swivel axis and that regions of the two actuating elements which lie at a distance from the swivel axes which are parallel to each other are coupled with each other so that they automatically pivot together with respect to each other.

In a device according to the invention the displacement of the actuating elements therefore takes place by pivoting about defined, undisplaceable swivel axes, the coupling of the actuating elements ensuring that when one actuating element is pivoted by the action of the hand of the operator the other actuating element is also pivoted, i.e. all actuating elements are also displaced from the off-position when one of the actuating elements is displaced from the off-position. The actuating elements can in this way operate the switch mechanism in the desired manner.

The actuating elements are preferably coupled with each other at their adjacent ends. For example, a receiving slot can be provided in one actuating element, and a pin, engaged with the receiving slot, can be provided on the other actuating element, so that engagement of the receiving slot and the pin ensures that the coupled actuating elements automatically pivot together, wherein upon pivoting the pin can be displaced within the receiving slot in its longitudinal direction.

In a particularly preferred embodiment of a power tool according to the invention at least one of the actuating elements is an L-shaped lever with a swivel axis lying at the point where its arms connect, and one of the actuating elements is coupled with a section which is on the side of the swivel axis facing away from the coupled regions of the actuating elements, wherein both actuating elements can be L-shaped levers.

In an arrangement of this type, because of the L-shaped structure of the actuating element, two grip regions are formed which lie in different alignments for the operator. For example, one arm of the L-shaped lever can lie in a lateral section of the handle and the other arm can lie in a section of the handle running transverse thereto.

In an arrangement of this type the section coupled with the switch mechanism can be formed by the end region of one arm of an L-shaped actuating element. A sliding part can be coupled on this end region which, when the actuating elements are in the off-position, is in a central position and when the actuating elements are moved out of the off-position is in an operating position.

On the sliding part a ramp region acting on the switch mechanism can be provided, which in the central position acts on the switch mechanism with a middle section and when in the operating position acts thereon with an outer section set higher than the middle section.

The switch mechanism in a device driven by an electric motor can, for example, be a switch which lies in the electric circuit of the drive motor and which when the actuating elements are in the off-position opens the electric circuit for the drive motor and closes it when the actuating elements are displaced relative to the off-position. It is, however, also possible for the switch mechanism to act on a coupling connecting the motor with the cutting tool or the like, and to separate the latter when the actuating elements are in the off-position so that despite the fact that the motor is running, no movement of the cutting tool or the like takes place whereas the switch mechanism brings the coupling into engagement if the actuating elements are displaced from the off-position so that the cutting tool or the like of the device is driven by the motor. To keep the spring-loaded actuating elements in a defined position in the off-position, a stop device can be provided.

The invention will now be explained in more detail with reference to the accompanying drawings, of which:
Figure 1 is a perspective view of a motor-driven chain-saw;
Figure 2 is a schematic view of one half-shell of the front handle of the chain-saw of Figure 1, with the actuating elements inserted and also schematically parts of the casing of the chain-saw with a switch forming the switch mechanism; and
Figure 3 is a section along the line III-III of Figure 2, with the actuating element in the off-position in the left half and in a displaced position in the right half.

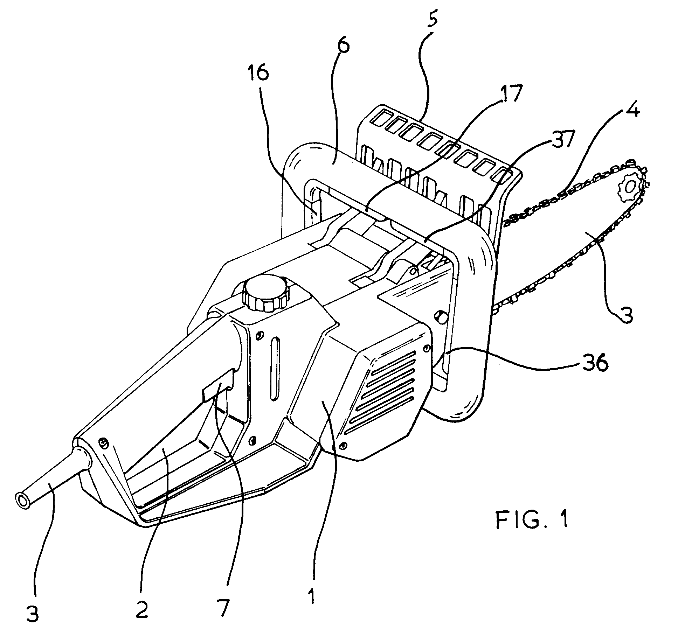

The chain-saw shown in Figure 1 has an essentially conventional construction with a casing 1, in which the electric motor, not shown, and also a gear coupled therewith, also not shown, are located. At one end of the casing 1, a support plate 3 projects therefrom, around the edge of which runs the chain 4 which is to be driven by the electric motor. A handle opening 2 is constructed on the opposite end of the casing 1, such that a rear handle is formed from which a trigger element 7 projects into the handle opening 2. An on/off switch for the electric motor can be actuated by means of this trigger element 7 to switch on the electric motor which can be connected with a power source by means of a connecting lead, not shown, which extends through a strengthening bush 8.

A bow-shaped front handle 6 is attached to the casing on the end of the casing 1 adjacent the support plate 3 and a kick-back guard 5 is mounted between this and the support plate 3. In the front handle 6, which is essentially hollow, actuating elements to be described below are located, which must be displaced from their off-position by the operator to make it possible for the chain 4 to be driven.

The chain saw shown therefore has a two-handed actuation, i.e. the chain 4 can be moved by the electric motor, not shown, only if both the trigger element 7 in the region of the grip opening 2 has been moved against spring resistance, and an actuating element has been moved out of its normal position in the region of the front handle 6 against spring resistance by the operator.

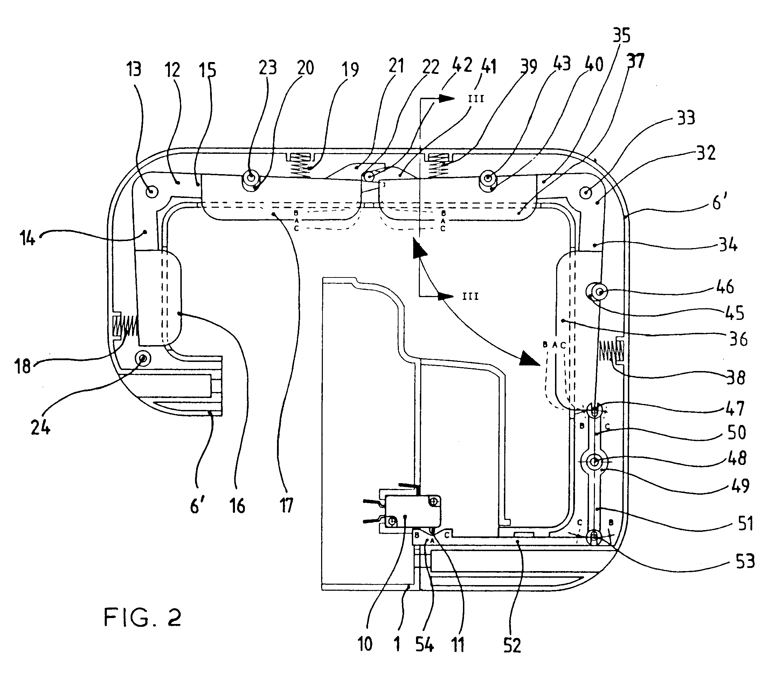

As shown in Figure 2, two L-shaped actuating elements 12 and 32 are located in the front handle 6, which consists of a half-shell 6' and a half-shell 6''. The actuating element 12 can be moved about a swivel or pivot axis 13 and the actuating element 32 can be moved about a swivel or pivot axis 33 running parallel to the swivel axis 13. The swivel axes 13 and 33 lie in the transitional region from the upper section of the hand-grip 6 to its lateral sections. The arms 15 of the actuating element 12 and the arm 35 of the actuating element 32 extend in the upper section and the arm 14, running at right-angles to the arm 15, of the actuating element 12 extends in one side section and the arm 34 running at right-angles to the arm 35 of the actuating element 32, extends in the other side section of the handle 6. Each arm 14, 15, 34, 35 of the actuating elements 12, 32 had a grip region 16, 17, 36, 37, which projects through openings on the sides of the handle 6 facing the casing 1 into the region enclosed by the handle 6.

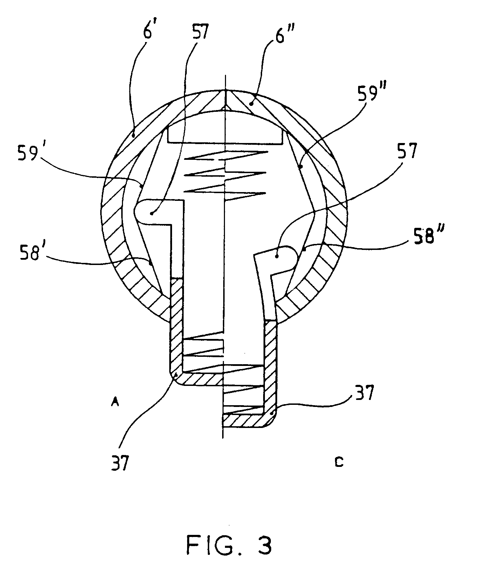

On the side facing away from the respective grip region 16, 17, 36, 37, of the associated arm 14, 15, 34, 35 of the actuating elements 12, 32, a coil spring 18, 19, 38, 39 acts which rests against the inner wall of the grip handle 6 and is held there by means of receiving recesses shown in Figure 2. The actuating elements 12 and 32 are therefore pressed by the springs 18, 19 and 38, 39 acting on them into a central position which represents the off-position (Figure 2). In order to define this off-position clearly, a stop device is provided which can be seen specifically in Figure 3.

The stop device has wedge-shaped surfaces 58', 59' and 58'', 59'' in the half-shells 6', 6'' (Figure 3), which surfaces slope downwards or upwards from the middle plane as in Figure 3. On the actuating element 32, in the grip region 37, stop arms 57 (not shown in Figure 2) are formed which extend upwards, the free ends of which lie against the wedge-shaped surfaces 58', 59' or 58'', 59'', and in the off-position (left half of Figure 3) are essentially not deformed and are situated in the intersecting region of the wedge-shaped surfaces 58', 59' and 58'', 59''. Upon displacement of the actuating element 32 from the off-position in the manner to be described below, the stop arms 57 are deformed elastically as a result of the engagement with the associated wedge-shaped surface (right half of Figure 3). This elastic deformation of the stop arms 57 has the effect that, as a result of the action of the springs 38, 39 of the stop arms 57 on returning to the off-position, the actuating element 32 is brought into the off-position defined by the intersection of the wedge-shaped surfaces 58', 59' and 58'', 59'' and is held in this position.

It should be mentioned that a corresponding stop device can, of course, be present for each of the actuating elements 12, 32.

A projection 21 is formed on the free end of the arm 15 of the actuating element 12, which projection has a slot 22 open in the direction of the arm 35 of the actuating element 32. On the free end of the arm 35 of the actuating element 32 there is a projection 41 on which a pin 42 is provided. The pin 42 extends into the slot 22 of the projection 21, so that the adjacent free ends of the arms 15 and 35 of the actuating elements 12 and 32 are coupled with each other such that pivoting one of the actuating elements 12 or 32 about its swivel axis 13 or 33 automatically results in a corresponding pivoting of the other actuating element 32 or 12 about the swivel axis 33 or 13. If therefore, for example, the actuating element 12 is displaced clockwise about its swivel axis 13 (Figure 2) then as a consequence of the coupling via the slot 22 in the projection 21 and the pin 42 there results a corresponding anti-clockwise pivoting of the actuating element 32 about the swivel axis 33.

At a distance from the free end of the arm 34 of the actuating element 32 a swivel axis 48 is provided in the handle 6 on which a two-armed lever 49 is pivotably seated. The arm 50, extending in the direction of the actuating element 32, of the lever 49 has, on its outer end, a slot which is open at the end of the arm 50 into which extends a coupling pin 47 provided on the free end of the arm 34 of the actuating element 32. The other arm 51 of the lever 49 has a corresponding slot to receive a coupling pin 53 which is attached on one end of an oblong sliding part 52 which can be reciprocated and guided by projections in the half-shells 6', 6'' in the direction of its longitudinal extension. On the free end of the sliding part 52 there is a ramp region 54 which has a middle section A which lies lower than the two neighbouring outer sections B and C.

A switch 10 is fixed next to the ramp region 54 in the casing 1, the actuating pin 11 of which is situated in the position shown next to the middle section A of the ramp region 54. The switch 10 is connected (in a manner not shown) into the electric circuit for the excitation of the electric motor of the chain-saw, so that an excitation of the electric motor is possible only when the switch 10 is closed, i.e. when the actuating pin 11 is depressed from the position indicated in Figure 2 against spring resistance into the casing of the switch 10.

It should be mentioned that the two half-shells 6' and 6'' are connected in the usual way by screws, which are inserted through openings in the half-shell 6'' and are screwed into receiving sockets 23, 24, 43, 46 formed in the half-shell 6, the receiving sockets 23, 43, 46 being situated in the region of the recesses 20, 40, 45 in the arms 15, 35, 34 of the actuating elements 12, 32 and thus providing additional guidance for the actuating elements 12, 32 during pivoting and also limiting the pivot movements of the actuating elements.

In the position shown in Figure 2 the actuating elements 12 and 32 are held in the off-position by the forces of the springs 18, 19 and 38, 39 and the action of the stop device 57, 58', 58'', 59', 59'', as a result of which the actuating element 32 holds the two-armed lever 49 in a position where the latter holds the sliding part 52 in such a position that the middle section A of its ramp region 54 is directly beneath the actuating pin 11 of the switch 10, and thus the switch 10 is opened.

If the operator, for example, pivots the actuating element 32 clockwise about swivel axis 33 (Figure 2) by gripping the grip region 37 against the force of the spring 39, then this results not only in an anti-clockwise pivoting of the actuating element 12 about the swivel axis 13, but also, due to the engagement of the coupling pin 47 with the slot in the end of the arm 50 of the two-armed lever 49, in the anti-clockwise pivoting thereof (Figure 2). This pivoting of the two-armed lever 49 has the effect, via the coupling of its arm 51 with the coupling pin 53 of the sliding part 52, of displacing the sliding part 52 in Figure 2 to the right, so that the outer section B of the ramp region 54 of the sliding part 52 is displaced in the direction of the actuating pin 11 of the switch 10. The actuating pin 11 then slides on to a rising ramp connecting the middle section A with the outer section B and is, as a result, pushed into the casing of the switch 10, until the actuating pin 11 lies on the section B of the ramp region 54 and is thus held in its completely depressed position, in which the switch 10 is closed. If, at the same time, the trigger element 7 is pushed inwards into the casing 1 by the operator the electric circuit for the drive motor of the chain-saw is closed.

On release of the actuating element 32, the latter returns into the off-position shown in Figure 2 due to the force of the spring 39, and the actuating element 12 also attains the off-position due to the coupling provided. The two-armed lever 49 is returned to the position shown in Figure 2 so that the sliding part 52 is also moved to the position shown in which the actuating pin 11 of the switch 10 is again above the section A of the ramp region 54 and the switch 10 is opened.

If the actuating element 32 is displaced anti-clockwise (Figure 2), for example by the operator exerting pressure on the grip region 36 of the actuating element 32 or on the grip region 16 of the actuating element 12, the two-armed lever 49 is correspondingly displaced clockwise about the swivel axis 48 and, as a result, the sliding part 52 is brought into a position in which the outer section C of the ramp region 54 is beneath the actuating pin 11 of the switch 10. The outer section C is formed according to the outer section B of the ramp region 54 and thus causes the switch 10 to be closed in the same way.

## Claims

1. A portable power tool with a grip handle (6), which is constructed at least in part as a hollow profile and in which at least two actuating elements (12, 32) are provided which can be moved by the operator against spring resistance from an off-position and which are coupled with a switch mechanism (10,11) which interrupts the drive of the tool when the actuating elements (12, 32) are in the off-position, characterised in that each of the actuating elements (12; 32) can be pivoted about a swivel axis (13; 33) and that regions (21, 22; 41, 42) of the two actuating elements (12; 32) which lie at a distance from the swivel axes (13; 33) which are parallel to each other are coupled with each other so that they automatically pivot together with respect to each other.

2. A power tool according to claim 1, characterised in that the actuating elements (12, 32) are coupled with each other at their adjacent ends.

3. A power tool according to claim 2, characterised in that a receiving slot (22) is provided in one actuating element (12) and a pin (42) engaged with the receiving slot (22) is provided on the other actuating element (32).

4. A power tool according to one of claims 1 to 3, characterised in that at least one of the actuating elements is an L-shaped lever (12; 32) with a swivel axis (13; 33) lying in the region where its arms (14, 15; 34, 35) connect and that one of the actuating elements (32) is coupled with the switch mechanism (10, 11) at a section (34) which lies at the side of the swivel axis (33) facing away from the coupled regions of the actuating elements (12, 32).

5. A power tool according to claim 4, characterised in that the two actuating elements are L-shaped levers (12, 32).

6. A power tool according to claim 4 or 5, characterised in that the section coupled with the switch mechanism (10, 11) is formed by the end region of an arm (34) of an L-shaped actuating element (32) and that a sliding part (52) is coupled with this end region which is in a middle position when the actuating elements (12, 32) are in the off-position and is in an operating position when the actuating elements (12, 32) are moved out of the off-position.

7. A power tool according to claim 6, characterised in that a ramp region (54) acting on the switch mechanism (10, 11) is provided on the sliding part (52) which in the middle position acts on the switch mechanism (10, 11) with a middle section (A) and in the working position acts on it with an outer section (B; C) set higher than the middle section (A).

8. A power tool driven by an electric motor according to any of claims 1 to 7, characterised in that the switch mechanism (10, 11) is a switch lying in the electric circuit of the drive motor.

9. A power tool according to any of claims 1 to 8, characterised by a stop device (57, 58', 58'', 59', 59'') which positions the actuating elements (12, 32) in the off-position.

## Patentansprüche

1. Tragbares, kraftgetriebenes Werkzeug mit einem Griff (6), der zumindest teilweise als ein Hohlprofil ausgebildet ist und in dem mindestens zwei Betätigungselemente (12, 32) vorgesehen sind, die vom Benutzer gegen Federkraft aus einer Aus-Stellung bewegt werden können und die mit einer Schalteinrichtung (10, 11) gekoppelt sind, die den Antrieb des Werkzeugs unterbricht, wenn sich die Betätigungselemente (12, 32) in der Aus-Stellung befinden, **dadurch gekennzeichnet,** daß jedes der Betätigungselemente (12; 32) um eine Schwenkachse (13; 33) geschwenkt werden kann und daß Bereiche (21, 22; 41, 42) der beiden Betätigungselemente (12; 32), die im Abstand von den Schwenkachsen (13; 33) liegen, die zueinander parallel verlaufen, miteinander gekoppelt sind, so daß sie zwangsweise in Bezug aufeinander gemeinsam verschwenken.

2. Kraftgetriebenes Werkzeug nach Anspruch 1, **dadurch gekennzeichnet,** daß die Betätigungselemente (12, 32) mit ihren einander benachbarten Enden miteinander gekoppelt sind.

3. Kraftgetriebenes Werkzeug nach Anspruch 2, **dadurch gekennzeichnet,** daß ein Aufnahmeschlitz (22) in einem Betätigungselement (12) vorgesehen ist und ein Zapfen (42), der mit dem Aufnahmeschlitz (22) in Eingriff steht, am anderen Betätigungselement (32) vorgesehen ist.

4. Kraftgetriebenes Werkzeug nach einem der Ansprüche 1 bis 3, **dadurch gekennzeichnet,** daß zumindest eines der Betätigungselemente ein L-förmiger Hebel (12; 32) mit einer Schwenkachse (13; 33) ist, die in dem Bereich liegt, in dem seine Schenkel (14, 15; 34, 35) in Verbindung stehen, und daß eines der Betätigungselemente (32) mit der Schalteinrichtung (10, 11) mit einem Abschnitt (34) gekoppelt ist, der an der Seite der Schwenkachse (33) liegt, die den gekoppelten Bereichen der Betätigungselemente (12, 32) abgewandt ist.

5. Kraftgetriebenes Werkzeug nach Anspruch 4, **dadurch gekennzeichnet,** daß die beiden Betätigungselemente L-förmige Hebel (12, 32) sind.

6. Kraftgetriebenes Werkzeug nach Anspruch 4 oder 5, **dadurch gekennzeichnet,** daß der Abschnitt, der mit der Schalteinrichtung (10, 11) gekoppelt ist, durch den Endbereich eines Schenkels (34) eines L-förmigen Betätigungselementes (32) gebildet ist und daß ein Schieberteil (52) mit diesem Endbereich gekoppelt ist, das sich in einer Mittelstellung befindet, wenn sich die Betätigungselemente (12, 32) in der Aus-Stellung befinden, und sich in einer Arbeitsstellung befindet, wenn die Betätigungselemente (12, 32) aus der Aus-Stellung bewegt werden.

7. Kraftgetriebenes Werkzeug nach Anspruch 6, **dadurch gekennzeichnet,** daß am Schieberteil (52) ein auf die Schalteinrichtung (10, 11) wirkender Rampenbereich (54) vorgesehen ist, der in der Mittelstellung mit einem Mittelabschnitt (A) auf die Schalteinrichtung (10, 11) wirkt und in der Arbeitsstellung mit einem Außenabschnitt (B; C), der gegenüber dem Mittelabschnitt (A) höhenversetzt ist, auf sie wirkt.

8. Kraftgetriebenes Werkzeug, das durch einen Elektromotor angetrieben wird, nach einem der Ansprüche 1 bis 7, **dadurch gekennzeichnet,** daß die Schalteinrichtung (10, 11) ein Schalter ist, der im Stromkreis des Antriebsmotors liegt.

9. Kraftgetriebenes Werkzeug nach einem der Ansprüche 1 bis 8, **gekennzeichnet durch** eine Rasteinrichtung (57, 58', 58'', 59', 59''), die die Betätigungselemente (12, 32) in der Aus-Stellung positioniert.

## Revendications

1. Outil électrique portatif muni d'une poignée de saisie (6), qui est construite au moins en partie sous forme d'un profil creux et dans laquelle sont agencés au moins deux éléments d'actionnement (12, 32) pouvant être déplacés par l'opérateur à partir d'une position arrêt à l'encontre de la résistance d'un ressort et qui sont accouplés à un mécanisme de commutation (10, 11) qui interrompt l'entraînement de l'outil quand les éléments d'actionnement (12, 32) sont dans la position arrêt, caractérisé en ce que chacun des éléments d'actionnement (12; 32) peut pivoter autour d'un axe formant pivot (13; 33) et en ce que des zones (21, 22; 41, 42) des deux éléments d'actionnement (12; 32) situées à distance des axes formant pivot (13; 33) qui sont parallèles entre eux sont accouplées l'une à l'autre, de sorte qu'elles pivotent ensemble automatiquement l'une par rapport à l'autre.

2. Outil électrique selon la revendication 1, caractérisé en ce que les éléments d'actionnement (12, 32) sont accouplés l'un à l'autre au niveau de leurs extrémités adjacentes.

3. Outil électrique selon la revendication 2, caractérisé en ce qu'une encoche réceptrice (22) est agencée dans un premier élément d'actionnement (12) et un axe (42) coopérant avec l'encoche réceptrice (22) est agencé sur l'autre élément d' actionnement (32).

4. Outil électrique selon l'une quelconque des revendications 1 à 3, caractérisé en ce qu'au moins un des éléments d'actionnement est un levier en forme de L (12; 32), comportant un axe formant pivot (13; 33) situé dans la zone de raccordement de ses bras (14, 15; 34, 35) et en ce que l'un des éléments d'actionnement (32) est accouplé au mécanisme de commutation (10, 11) au niveau d'une partie (34) qui est située au niveau du côté de l'axe formant pivot (33) dirigé s'éloignant des zones accouplées des éléments d'actionnement.

5. Outil électrique selon la revendication 4, caractérisé en ce que les deux éléments d'actionnement sont des leviers en forme de L (12, 32).

6. Outil électrique selon la revendication 4 ou 5, caractérisé en ce que la partie accouplée au mécanisme de commutation (10, 11) est formée par la partie d'extrémité d'un bras (34) d'un élément d'actionnement en forme de L (32) et en ce qu'une pièce coulissante (52) est accouplée avec cette partie d'extrémité, en étant dans une position médiane quand les éléments d'actionnement (12, 32) sont dans la position arrêt et se trouvant dans une position active quand les éléments d'actionnement (12, 32) sont déplacés en dehors de la position arrêt.

7. Outil électrique selon la revendication 6, caractérisé en ce qu'une zone formant rampe (54) agissant sur le mécanisme de commutation (10, 11) est agencée sur la pièce coulissante (52), zone qui, dans la position médiane, agit sur le mécanisme de commutation (1O, 11) par l'intermédiaire d'un tronçon central (A) et dans la position active agit sur lui par l'intermédiaire d'un tronçon extérieur (B; C) surélevé par rapport au tronçon central (A).

8. Outil électrique entraîné par un moteur électrique selon l'une quelconque des revendications 1 à 7, caractérisé en ce que le mécanisme de commutation (10, 11) est un commutateur situé dans le circuit électrique du moteur d'entraînement.

9. Outil électrique selon l'une quelconque des revendications 1 à 8, caractérisé en ce qu'il comporte un dispositif d'arrêt (57, 58', 58'', 59', 59'') positionnant les éléments d'actionnement (12, 32) dans la position arrêt.
